(19) Europäisches Patentamt
European Patent Office
Office européen des brevets

(11)  **EP 2 124 607 B1**

(12)  **EUROPEAN PATENT SPECIFICATION**

(45) Date of publication and mention
of the grant of the patent:
**26.11.2014  Bulletin 2014/48**

(51) Int Cl.:
*A23K 1/00* *(2006.01)*      *A23K 1/16* *(2006.01)*
*A23K 1/18* *(2006.01)*

(21) Application number: **07785782.9**

(22) Date of filing: **13.07.2007**

(86) International application number:
**PCT/EE2007/000013**

(87) International publication number:
**WO 2008/101508 (28.08.2008 Gazette 2008/35)**

(54) **VACUUM COATED PET FOOD**

VAKUUMBESCHICHTETEM HOBBYTIERFUTTER

ALIMENT POUR ANIMAUX DE COMPAGNIE, REVETU SOUS VIDE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **21.02.2007  EE 200700008**

(43) Date of publication of application:
**02.12.2009  Bulletin 2009/49**

(73) Proprietor: **Bacterfield GmbH
20355 Hamburg (DE)**

(72) Inventor: **KIREJEVAS, Vygantas
EE10112 Tallinn (EE)**

(74) Representative: **Kristensen, Martin Hjelm
Otello Law Firm
Christiansgade 24 A
8000 Aarhus C (DK)**

(56) References cited:
**WO-A-2006/041903      WO-A2-2007/060539
GB-A- 2 232 573      US-A- 5 968 569**

**Description**

TECHNICAL FIELD

This invention is related to combination of pet food composition and the manufacturing process of the line of super premium pet food product. More specifically, the invention relates in a first and second aspect to pet food kibble and in a third aspect to a method of producing the pet food kibble of the first and second aspect. The invention is defined in the claims.

THE BACKGROUND ART

The microflora

All animals are born with a relatively sterile gut. Thus the newly born animal will be more easily colonised by pathogenic micro-organisms as there is no protective microflora to reduce the colonisation of pathogens at this stage of life.
Soon after birth the newly born animal acquires a complex collection of microorganisms which populate its intestinal tract. This collection of micro-organisms is termed as the microflora. The gut microflora contains a variety of different bacteria and fungi of which there are typically -400 different types of micro-organisms with a total population of $\sim 10^{14}$ throughout the length of the intestinal tract.

Location in the digestive system

This complex collection of gut micro-organisms is distributed throughout the whole length of the gut. Within particular regions the organisms may be found in three niches:

(a) associated with gut wall. This can either take the form of direct attachment to the epithelium as in the case with lactobacilli in the crop, or entrapment in the mucous layer of the epithelium as happens in the caecum.
(b) attachment to food particles
(c) suspension in the liquid phase of the gut contents.

Composition

The composition of the flora varies in different regions of the intestine and is dependent on factors such as pH. The small intestine tends to be dominated by lactobacilli with smaller numbers of other facultative anaerobes such as conforms and streptococci. The posterior regions of the gut have large numbers of obligate (able to exist under only one set of environmental conditions) anaerobic bacteria. The caecum in particular is favourable for the growth of anaerobes such as Clostridia and bacteroides.
The microflora which develops in the dog's intestinal tract is characteristic for that species which has evolved a symbiotic association with the host. This applies particularly to the caecal microflora.

Role of gut flora in digestion

The microflora forms a symbiotic relationship with the host and benefits the host by aiding digestion by producing various enzymes, which are involved in the digestion/breakdown of large feed particles/polysaccharides such as cellulose.
The bacteria in the gut can also stimulate an immune response. For example, germfree animals have lower levels of gamma-globulin than do conventional animals with a complete gut flora.
The use of antibiotics can adversely affect the gut flora. When antibiotics are used, as a treatment for clinical disease, a proportion of the beneficial micro-organisms becomes disrupted and can lead to an increased susceptibility of the gut to colonisation of pathogenic bacteria. The consequent reduction in disease resistance is manifested by an increased vulnerability to salmonella and other pathogens colonisation of the gut, which may lead to diarrhoea.
One factor that should be considered when dealing with animals is stress. There is also strong evidence that stress can affect the composition of the gut microflora. Stress can be described as a factor that stimulates homeostatic, physiological and behavioural responses in excess of the norm. The only accepted measure of the presence or absence of a stress or is the blood level of adrenal corticosteroids which becomes raised during stress which effects the peristaltic movement of the gut and the production of mucus within the gut. Stress also affects the intestinal microflora by reducing the concentration of lactobacilli and other Lactic Acid Bacteria (LAB) and increasing the concentrations of coliforms such as *E. coli.*
All stressful situations to which an animal is exposed contribute towards an increased intestine pH (more alkaline), and thus the gastrointestinal tract is likely to favour the development of pathogenic species such as *E. coli* at the expense of beneficial species.

Vaccination, antibiotic therapy, weaning, travel, rehousing or illness are a few of the factors that are considered as stresses that may result in a change of balance of gut flora in favour of pathogenic species.

Stress is also known to alter the protease content of saliva. As a result fibronectin and the autochthonous (commensal) bacterial population are lost from the oropharyngeal surface in stressed individuals. This autochthonous population Is then rapidly replaced by a biofilm composed largely of *Pseudomonas aeruginosa.*

Stress can depress the immune response of animals and humans and some antibiotics have been shown to depress the immune response significantly leading to a reduction in weights of the spleen and thymus. Withdrawal of the antibiotics in these cases can lead to the restoration of gut flora and a return to immune function. Antibiotics can also often reduce the lactobacilli population. Hence animals enduring stress exhibit alterations and breakdown of the regulatory mechanism in the gastrointestinal tract ecosystem allowing easier establishment of pathogens within the tract.

Dr Roy Fuller defined a probiotic as 'a live microbial feed supplement which beneficially affects the host animal by improving its intestinal microbial balance (Fuller, 1989). This definition emphasises the importance of live cells as essential components of probiotics.

The word probiosis originated from Greek: pro (for) and biosis (life), and is therefore opposite in meaning to antibiosis, promoting the proliferation of bacterial species within the gastrointestinal tract. Probiosis is defined as 'the property of the normal adult flora to resist the overgrowth of component strains and the establishment of foreign strains' and is reinforced or re-established by probiotics.

The concept of probiotics applied to preventative medicine is claimed to have originated from Metchnikoff. He postulated that the longevity observed in the Balkan people was due to the regular consumption of soured milk containing *Lactobacillus bulgaricus.*

The gut of the newly born animal is relatively sterile and is therefore deficient in the micro-organisms, which normally populate the gut and provide resistance to disease. The intervention of a probiotic supplement establishes the gut microflora.

Probiotics have been shown to work by the following mechanisms:

Competition for nutrients

Within the gut, beneficial as well as pathogenic micro-organisms will be utilising the same types of nutrients. Thus there will be a general competition for these nutrients to grow and reproduce. Hence, the more the gut is flooded with beneficial micro-organisms, the more competition is created between beneficial and pathogenic micro-organisms.

Competition for adhesion sites

Adhering to adhesion sites along the wall of the gut is an important colonisation factor and many intestinal pathogens rely on adhesion to the gut wall to prevent them being swept away by peristaltic of food along the intestinal tract.
Stimulation of immunity
Stimulation of antibody production (local and systemic)
Increased macrophage activity
Increases gamma interferon levels
Direct antimicrobial effect

This can either operate via bacteriocins, which are known to be produced by many species of lactic acid bacteria or by the production of organic acids, which can either have a direct effect or operate by reducing the pH.

Improvement in digestion

Probiotic micro-organisms act like and add to the healthy microflora by producing enzymes, which aid the breakdown of polysaccharides molecules and hence utilise more nutrients form the diet. The microflora also produces vitamins, which supply a secondary source to the host.

To produce the desirable effect a minimum concentration of micro-organisms must be able to survive ingestion and grow in the intestine. However, the minimum effective dose of live bacteria cannot be easily identified. It has been suggested that once the concentration of a particular microorganism fell to $10^7$ per g of faeces, it does not play a role in the ecosystem provided that it remains below this level at all times. This is supported by observations that the host animal can tolerate populations less than $10^7$ clostridia or enterobacteria per gram of intestinal contents. It is therefore postulated that a probiotic will be effective if it provides at least $10^7$ CFU and hence these levels have been adopted as a minimum dose.

Safety - the micro-organism chosen as the components of a probiotic must be non-pathogenic and non-toxic

Viability - a probiotic can only work if the micro-organisms contained within the probiotic remain viable during storage of the product and through the gut to ensure colonisation of these micro-organisms

Minimum dose - the concentration of a probiotic must be such that inclusion rates provide $10^7$ - 108 CFU per animal

Quality insurance - it is essential that a probiotic has not become contaminated with any other microorganism others than the particular probiotic micro-organisms chosen at any stage e.g. fermentation, of the manufacturing process or during storage.

Protexin is a highly concentrated probiotic, which contains millions of beneficial micro-organisms, which occur naturally in the gut of all healthy birds and animals. These micro-organisms colonise the immature gut or re-establish the disrupted gut, thus promoting the mechanism of competitive exclusion against potential pathogenic bacteria.

The probiotic microorganism, Enterococcus faecium, contained within this invention is steam from the internationally recognised culture collection NCIMB (National Collections of Industrial and Marine Bacteria). The strain is grown in a fermentation chamber of 5000 L capacity. It is then protected using coated cryoprotectants and freeze dried to form a powder before being blended with the Pet Food and other components of Protexin Concentrate in exact concentrations.

The fermentation facilities must meet very high standards of quality control (GMP) and hygiene as they have been licensed also to produce human grade probiotic micro-organisms.

*Enterococcus feecium* is selected for its ability to perform specific functions within the digestive tract of the host. The justification for its inclusion in Pet Food is as listed below:

*Enterococcus faecium*

Protection against enterotoxigenic *E. coli* diarrhoea (Jin *et al.,* 2000; Underdahl *et al.* 1982; Wadstrom, 1984).

Inhibition of Salmonella spp. including *S. enteritidis, S. typhimurium, S. pullorum.* (Audisio *et al.,* 1999; Carina *et al.*, 2000; Maia *et al.,* 2001; Roach and Tannock, 1980) and Listeria (Audisio *et al.,* 1999 and 2001).

Prevents or shorten the duration of antibiotic-associated diarrhoea (Bergogre-Berezin, 2000; Elmer, 2001; Marteau *et al.,* 2001).

Production of antimicrobial substances (bacteriocins and lactic acid) active against gut pathogens (Audisio *et al.,* 1999 and 2001; Carina *et al.,* 2000).

Immunostimulatory effect in humans (Agerholm-Larsen, 2000; Ferencik *et al.,* 1999 and 2000).

Growth in presence of bile salts and survival at gastric conditions (acidic pH) (Canganella *et al.,* 1997; Nikoskelainen *et al.,* 2000; Zacconi *et al.,* 1992).

Colonises the intestine (Nikoskelainen *et al.,* 2000; Zacconi *et al.,* 1992).

Prevention of acute infantile diarrhoea and other diarrhoeal illnesses (Elmer *et al.,* Proven efficacy in treatment of irritable bowel syndrome in humans (Gardiner *et al.,* 1999).

Increases cellulytic activity in caecum of chicken (Kumprecht *et al.*, 1984)

Reduction of cholesterol in humans (Agerholm-Larsen, 2000; de Roos and Katan, 2000) and mice (Zacconi *et al.,* 1992).

Some of the ways in which Probiotic Pet Food can benefit the host animal are:

- reduction of the effects of stress
- reduction of diarrhoea and other digestive upset
- improved immunity and resistance to disease
- reduction of Salmonella levels
- improvement in digestion.

Some of the ways in which Probiotics can benefit the host animal are:

- reduction of the effects of stress
- reduction of diarrhoea and other digestive upset
- improved immunity and resistance to disease
- reduction of Salmonella levels
- improvement in digestion

There are no disadvantages to use Probiotic Pet food at any timel There are no restrictions on the use of Protexin. This product can be fed at any stage of production.

This invention contains micro-organisms commonly found in all healthy birds and animals all of which are GRAS (Generally Regarded As Safe) rated.

Protexin has never been found to be toxic. Even more than 100 times the recommended level does not cause any problems. None of the ingredients used in the manufacture of Protexin will cause irritations or allergic reactions. They all conform to food regulations and are approved by the US Food and Drug Administration.

Since the bacteria from this invention (Protexin) are inactive and inert in excreta there is no persistence of the additive or its residues in faeces. There are no known effects of Protexin on methanogenesis. Protexin is an inert material it will not persist in the environment. There are no known adverse effects of Protexin on aquatic life, on soil fauna or terrestrial plants.

However, there are a great number of advantages:

- completely safe and free from dangers of overdose
- enhances the animal's own natural defence mechanisms and makes it better able to cope with opportunistic infection
- highly effective under a wide variety of conditions

The digestive tract of any animal or bird will be colonised with many millions of micro-organisms. When the animal is healthy and disease free, the majority of these micro-organisms will be beneficial micro-organisms. However, even when the animal is healthy, there will still be potentially disease causing pathogen colonised within the 'healthy' gut. These pathogens are so low in concentration that disease will not develop until the animals' general health and immune status is affected.

This Invention and other Probiotics have been shown to stimulate and maintain a high immune status of the animal or bird and will hence help to prevent disease within an animal.

Furthermore, the beneficial probiotic micro-organisms contained within current invention will act to Competitively Exclude potentially pathogenic micro-organisms within the gut. Protexin, which contains Lactic Acid Bacteria and in included in the pet food, when colonised within the gut, will produce lactic acid, which has a low pH, which effectively produces the optimum conditions required for the growth of beneficial micro-organisms. This action helps to prevent the colonisation of coliforms such as *E. coli* which prefer a more alkaline pH.

The very acidic, low pH of the stomach in most animals is nature's way of attempting to remove some of the load of infection present in food. It is however not a completely effective process as is made apparent by the fact that the oral /gut route is the commonest way for infectious agents to enter the body.

The micro-organism contained within this invention is a Lactic Acid Bacteria (LAB), By definition these bacteria produce lactic acid which is acidic. This ensures the growth of the bacteria in an optimum acidic environment. By creating this acidic environment LABs are able to prevent the growth of coliforms such as *E. coli* as they prefer a more alkaline pH for growth.

Protexin pet food is also able to overcome the problem of stomach sterilisation by containing billions of micro-organisms so that some will always negotiate the pylorus and be available to colonise the gut. Also, the freeze drying and vacuum coating process, which is used to preserve the micro-organisms present in this invention, conveys an encapsulation, which protects against stomach acid.

The strains of micro-organisms contained within the pet food are fermented under strictly controlled conditions. Each strain has specific requirements for growth and parameters such as media used, pH, oxygen, temperature etc. These requirements are controlled by computer and by sampling. Additionally, testing at all stages of production and manufacture are carried out for contaminants.

Particular attention has been paid to the selection of the strains of microorganisms contained in Pet food in relation to ability to resist the action of bile, enzymes and acidity, the action of which can significantly affect viability.

Protection of the micro-organisms from adverse environmental conditions, both during and after production of bacteria is important. Cryoprotectants are applied prior to freeze-drying. This gives additional protection against moisture, oxygen and heat and adds substantially to the shelf-life of the end product. Thus while using vacuum coating technology it is possible to sustain such stability in the final product.

Over a three year period, Probiotics International Ltd. carried out definitive work at Birmingham University investigating improved methods of protecting micro-organisms. This work has been applied in practice but is under constant review as further research findings come to hand.

This method describes the enumeration of *Streptococcus* and *Enterococcus* spp. by a surface inoculation technique.

The method is applicable to powder, pellet and oil based (including paste) food supplement such as probiotics.

For the purposes of this test, streptococcus (including enterococcus) species are defined as bacteria forming typical colonies under the conditions of the test, are Gram-positive cocci and give a negative reaction in the catalase test.

Apparatus:

- Automatic pipettor, 0.02 ml
- Glass beads, sterile
- Incubator set at 30 +/- 1 °C (or 37 +/- 1 °C, or 22 +/- 1 °C)
- Microscope
- Pipettor calibrated to deliver 20 $\mu$l, 1.0 ml and 9.0 ml with associated sterile tips/graduated pipettes
- Standard Methods (Plate Count) agar plates (SMA)
- Sterile capped test-tubes
- Sterile wide-mouthed, screw-topped containers
- Stomacher and sterile stomacher bags
- Top loader balance with tare facility, sensitivity 0.01 g
- Vortex mixer

Media and Reagents:

- 2% (w/v) aqueous sodium citrate solution (for certain dairy products)
- 3% Hydrogen peroxide solution
- Blood agar plates (BA)
- Isopropyl myristate (myristic acid isopropyl ester)
- KF Streptococcus agar (KF)
- Maximum Recovery Diluent (MRD) - contains 0.1 % peptone, 0.85% NaCl.

Method:

Prepare a 1/10 sample homogenate and further decimal dilutions as described in methods A: 1a and A: 1 b below.

Starting with the highest dilution, apply two 0.02 volumes of each dilution to the surface of an appropriately marked segment of a KF plate and a BA plate (see A:2c).

Allow the Inocula to dry. Invert the plates and incubate at 37 °C for 48 +/- 2 hours. Examine the plates after 48 hours and count. Colonies of most streptococci will normally appear as discrete small to medium grey or white colonies on blood agar medium. Colonies of enterococci appear maroon/dark pink on KF streptococcus agar, and will be apparent after one day of incubation. Streptococci other than enterococci will grow on the blood agar medium but may not grow on KF agar.

Count the colonies of streptococci/enterococci on both media at the end of the incubation period and record.

Confirm the presence of streptococci by colonial appearance and by performing Gram staining of different colonial forms if necessary. Further confirm identity by performing the catalase test. Gram positive cocci that give a negative reaction in the catalase test are considered as streptococci/enterococci.

Reporting

To obtain the count per g, multiply the total number of colonies counted by the fraction of 5 colonies confirmed as streptococci (enterococci), then divide by the dilution used.

If a surface drop plate has been used, calculate the count per gram (g) from the confirmed colony count as described in Method A:2c above.

Report the count of streptococci (enterococci) per g (or ml) of sample. If the count is below 100, express the count to the nearest 5. If the count is 10 or more, express the count as two significant figures multiplied by the appropriate power of 10, with one figure before and one figure after the decimal point.

If no colonies are detected at the $10^{-1}$ dilution, report the Total Viable Count (TVC) as < $2.5 \times 10^2$ /g.

Limit of detection: $2.5 \times 10^2$ /g

Method A:1a Preparation of sample homogenates

This method describes the preparation of samples to produce a homogenate suitable for enumeration purposes. The homogenate can be used for the preparation of further dilutions.

Preparation and initial dilution of the samples varies according to the nature of the sample being examined and each individual client's protocol. In general, a 10-25g sample is accurately weighed using aseptic techniques and homogenized in sufficient diluent to obtain either a 1/10.

### Powder and pelleted preparations

1. Thoroughly shake or mix the sample if possible in its container before taking the laboratory aliquot.

2. Aseptically weigh at least 10g accurately into a tared stomacher bag.

3. Add approximately twice the weight of isopropyl myristate

4. Add a weight of MRD numerically equal to nine times the weight of sample to prepare a 1/10 dilution. Record the final weight of sample plus diluent, which should be 10 times the weight of the sample $\pm$ 5%, e.g. if 10.5g of sample has been weighed out the final weight should be 105 ml $\pm$ 5% or in the range 100.3-110.2 ml.

5. Allow to rehydrate for 30 minutes before homogenizing.

6. Place the bag in the stomacher and operate the machine for 1-2 minutes.

7. Transfer to a sterile wide-mouthed screw-topped container.

8. Use this $10^{-1}$ homogenate to make further decimal dilutions as described below. The time lapse between preparing the $10^{-1}$ homogenate and inoculation of the culture media should not exceed 45 minutes.

### Method A:1b Preparation of decimal dilutions

All dilutions prepared from the $10^{-1}$ homogenate should be prepared within 15 minutes of preparation of the homogenate. The nature of the sample under investigation will determine the number of dilutions required in order to obtain a count (TVC) per gram.

### Method

1. Using MRD, prepare a series of 9 $\pm$ 0.1 ml dilution blanks in sterile test tubes for each sample.

2. Label the series with the sample laboratory number and identify the dilution tubes.

3. Mix the sample homogenate by vortexing and allow any large particles to settle before removing an aliquot. If there is a fat layer, take the aliquot from the aqueous layer.

4. The time lapse between preparation of the sample homogenate and inoculation of the growth media shall not exceed 45 minutes.

### Dilution from a 1/10 homogenate

(i) Add 1 ml of the 1/10 homogenate to the first 9 ml dilution blank. Replace the cap on the test tube.

(ii) Vortex to mix the contents. This tube forms the $10^{-2}$ dilution.

(iii) Using a fresh tip each time, repeat the process to obtain further decimal dilutions.

### Method A:2c Aerobic Plate Count - Surface drop method

This method describes the enumeration of aerobic mesophilic organisms by a surface drop technique. The method describes incubation at 30 °C, but may be applied to other temperatures e.g.. 22 °C, 37 °C. A surface method of enumeration is used in preference to a pour plate method to obtain maximum recovery of obligately aerobic organisms, and to avoid the possibility of heat stress which may be introduced using molten agar in poured plate methods. The drop plate method minimizes operator fatigue and hence Inaccuracies in enumeration, reduces problems encountered due to spreading colonies produced by some strains of Bacillus spp., and facilitates differentiation between colonies and food particles. However, because of the small volumes of sample dilutions used, it is most suitable for use where levels of organisms are expected to exceed 3000 CFU per gram.

Method

1. Prepare the sample homogenate and further decimal dilutions as described in methods A:1a and A:1 b above.

2. Mark the plates on the bottom with the laboratory sample number. Divide the plate into segments (maximum four per plate) and mark each segment with the dilution to be used. Use SMA plates.

3. Inoculate the plate media within 45 minutes of preparing the sample homogenate. Use the 20 $\mu$l pipettor with sterile tip and the reverse pipetting technique. Start with the highest dilution and deliver two separate drops on to the surface of the relevant segment of the plate. Repeat with the next lowest dilution until all dilutions have been applied to the plates.

4. If counts are expected to be low, 5 or 10 drops of the food homogenate ($10^{-1}$ dilution) or liquid sample may be applied to a half or whole plate to decrease the limit of detection.

5. Replace the lids, allow the drops to dry at room temperature.

6. Invert the plates and place in an incubator set at 30 °C for 72 +/- 3 hours (or 22 °C for 72 +/- 3 hours, 37 °C for 24 +/- 2 hours or 48 °C +/- 2 hours as required by client).

7. At the end of the incubation period count and mark the colonies at all dilutions that have countable colonies. Record the counts. The number of countable colonies per drop will normally be less than 20, but for some organisms that form small colonies it is easily possible to count more (e.g. lactic acid bacteria).

Calculations and expression of results

If only one dilution has countable colonies, the count per gram is given by the formula:

$$N = \text{Mean count per drop} \times 1/d \times 50 \quad \text{Where } N = \text{count/g} \qquad d = \text{dilution}$$

If there are two or more colonies at two successive dilutions with countable colonies, use the weighted mean formula below to obtain the count per gram. Include the counts for all drips at the chosen dilutions including drops with no colonies.

$$N = \frac{\sum C}{(v1 + 0.1v2)d}$$

Where

$\sum C$ = Sum of colonies on all drops counted
$v_1$ = total volume of drops in first dilution counted
$v_2$ = total volume of drips in second dilution counted
d = dilution from which first count was obtained

NOTE: Where there is evidence of inhibition, only count the colonies of the highest dilution yielding 2 or more colonies per drop.

Reporting

Report the count per gram (g) or ml of sample to two significant figures. Also report the conditions of performance of the test e.g.: 30 °C/72 hr. Round up if the third digit of the count is 5 or more, round down if the third digit is 4 or less. If the count is greater than 100, record the count to the power of 10, with one number each side of the decimal point.
If no colonies are present even at the lowest dilution of the sample, report a value of less than the limit of detection per gram (g) or ml.
If the drops at the highest dilution contain too many colonies to count, report the count as greater than the countable number of colonies to the appropriate power of 10.
NOTE: It is helpful to the client to indicate a range within which the count lies.

Limit of Detection

Using 2 drops of $10^{-1}$; 2.5 x $10^2$/g or ml
Using 5 drops of $10^{-1}$: 1.0 x $10^2$/g or ml
Using 10 drops of $10^{-1}$: 50/g or ml
A: 16a Methodology for the enumeration of *Streptococci* and *Enterococci* spp. 1
Prepared by Probiotics International, Matts Lane, Stoke sub Hamdon, Somerset, TA14 6QE
All the test where carried out in the laboratory Microcheck Technical Services Ltd
10 Sandown Centre, White Horse Business Park, Trowbridge, Wiltshire BA14 0XD.

References:

BS 4285; Microbiological examination for dairy purposes. Section 2.1 Enumeration of microorganisms by pour plate technique for colony count. BSI, 1989.
BS 5763: Microbiological examination of food and animal feeding stuffs. Part 5 Enumeration of microorganisms - Colony count at 30 °C (surface plate technique). BSI. 1981.
BS 5763: Part 6: 1983. Microbiological examination of food and animal feeding stuffs. Preparation of dilutions.
BS EN ISO 6887-1 : 1999. Microbiology of food and animal feeding stuffs-Preparation of test samples, initial suspension and decimal dilutions. General rule for the preparation of the initial suspension and decimal dilutions, International Organisation for Standardisation (ISO).
D. Roberts, W. Hooper and M. Greenwood. Practical Food Microbiology page 101 method 5.6 Public Health Service, 1995.
ICMFS Microorganisms in Foods 1. Their significance and methods of enumeration. 2nd edition. University of Toronto Press, London. 1988.
ISO 8261 :2001. Milk and milk products - Preparation of samples and dilutions for microbiological examination. International Organisation for Standardisation (IS)).
WO 20061041903 A2 discloses a feed product to be fed to aquatic animals, such as fish for the purpose of imparing colour to the flesh of the animal. The feed product comprises a carotenoid producing bacteria, such as rhodopseudomonas or rhodospirillum. In one embodiment the feed product is produced by mixing the bacteria preparation with polylene glycol and cod liver oil using a blender. Subsequently, commercial fish feed pellets were coated with this mixture in an amount of 1 kg liquid to 10 kg feed pellets. The addition of liquid took place by slowly adding the liquid to the feed pellets while being turned in a cement mixer. The coated pellets were stored in plastic bags and left overnight before use. The product is claimed to increase the growth rate of the fed animals. WO 2006/041903 A2 does not disclose the use of probiotics, such as lactic acid bacteria or Saccharomyces cerevisiae. Furthermore, WO 2006/041903 A2 does not disclose coating of feed pellets using a vacuum technique.
GB 2 232 573 A discloses a pet food in pellet form and comprising solid edible feed pellets and an edible liquid. The edible liquid may be applied to the solid pellets under reduced pressure, resulting in absorption of the edible liquid into the pellets. The application of the edible liquid improves physical and nutritional characteristics. The edible liquid may be fish oil. GB 2 232 573 A does not disclose adding any probiotic substances to the edible liquid prior to application to the solid pellets.
US 5,968,569 discloses a pet food kibble comprising a gelatinized starch matrix, a lipid coating around the gelatinized starch matrix and a flavor coating including a protein digest, wherein said gelatinized starch matrix includes probiotic micro-organisms. The probiotic micro-organisms may be Saccharomyces cerevisiae. Use of fish oil as a vehicle for the probiotic micro-organisms is not disclosed. Coating of the gelatinized starch matrix using vacuum coating is not disclosed.
Although US 5,968,569 has been concerned with the storage lives of pet foods and suggested one way of providing this, there still exists a need for improvements.

BRIEF SUMMARY OF THE INVENTION

This need is fulfilled with the pet food kibble according to the first and second aspect of the present invention and with the method for producing such a pet food kibble according to the third aspect of the present invention.

Accordingly, in a first aspect, the present invention relates to a vacuum coated pet food kibble comprising within the kibble structure a mixture of viable probiotic micro-organisms and a fish oil, where said viable probiotic micro-organisms are lactic acid bacteria.

In a second aspect, the present invention relates to a vacuum coated pet food kibble comprising within the kibble structure a mixture of viable probiotic micro-organisms and a fish oil, where said viable probiotic micro-organism is Saccharomyces cersvisiae.

The present invention relates in a third aspect to a method for producing a pet food kibble according to the first or second aspect, respectively, containing the steps of

- mixing the probiotic micro-organisms with a fish oil,
- coating the main component of the conventional pet food with the mixture of the probiotic micro-organisms and said fish oil using vacuum coating.

The oil will be vacuum coated on the kibble and thus placing the bacteria within kibble structure. This way the bacteria is protected and has a great potential for survival and recovery.

This pet food is useful for improving the condition of digestive tract and general development of immune system in pets. This affect Is generated by an inclusion of

Probiotic Bacteria Branded as Protexin, as well as probiotics in the pet food using the vacuum coating technology.

Generally Probiotics are complementary feeding stuffs containing potentially beneficial bacteria.

Term fish oil in this document includes mackerel, lake trout, herring, sardines, salmon and albacore tuna oil.

Probiotic bacterial cultures are intended to assist the body's naturally occurring flora within the digestive tract to re-establish themselves. Thus creating a positive affect on animals general health, helping recovery of digestive problems. Building and boosting immune system through multiplying and inhabiting the gut micro flora thus improving the efficacy of food intake and competitive exclusion of hostile bacteria. It acts in a manner of bacteria competing for adhesion sites and substrates.

The normal gut microflora can be disturbed in several ways Gastroenteric disease, Antibiotic Therapy, Dietary Changes, Dietary inadequacies, Travel, Old age, Stress etc.

The immune system of the host is improved by Probiotics due to increase in Cytokine production, Phagocytic activity, Antibody production, Gamma interferon levels.

The probiotics and the minimum inclusion rates used in this invention will be as follows. The probiotic strains are classed as Feed Additives under Regulation EC No. 183/2003.

Dog food

Probiotic strain registered for use in dogs:

Enterococcus faecium NCIMB 10415 EC No. 13
Date of first entry into registration: 7/11/05
Min CFU/Kg complete feed: $1.0 \times 10^9$
Min CFU/Kg complete feed: $1.0 \times 10^{10}$

Rabbit food

Probiotic strain registered for use in rabbits:

Saccharomyces cerevisiae NCYC SC47 EC E1702
Date of first entry into registration: 7/11/05
Min CFU/Kg complete feed: $2.5 \times 10^9$
Min CFU/Kg complete feed: $7.5 \times 10^{10}$

Commercially available probiotics currently and in the future particularly Protexin (Probiotics International) will be used. Non registered strains Probiotics are a category of functional food, defined as: Non digestible food ingredients, that beneficially affect the host by selectively stimulating the growth and/or activity of one or a limited number of bacteria in the colon, and thus improve host health (Gibson and Roberfroid, 1995).

This invention also includes the particular technology that is used to include the bacteria into each and every kibble of the product. Vacuum multi coating technology that is available in United Petfood Ltd (Belgium) manufacturing facility is the method of including the beneficial oils, powders, smells and any other ingredients that are needed for sufficient final product.

As the Bacteria have to be protected from moist, heat and sunlight, the method of production will include freeze dried bacteria being mixed with the oil at a required concentration. While constantly stirring the oil has to become liquid for the vacuum coater. This is achieved by warming the oil to a temperature that is tolerated by the bacteria. The oil will be vacuum coated on the kibble and thus placing the bacteria within kibble structure. This way the bacteria is protected and has a great potential for survival and recovery.

The Pet food of this invention may be only in dry form as it is a factor essential to sustain the stability of the bacteria. Nevertheless this pet food can be based on any conventional pet foods and their ingredients, with the condition that the Pro biotic bacteria included is stable.

These ingredients may include:

- Crude proteins
- Crude Fats
- NFE - carbohydrate (nitrogen free extract)
- Crude fibres
- Ash and minerals
- Vitamins
- All other beneficial ingredients that are used in commercially available pet foods.

Usual components that provide these ingredients are poultry meat, animal meat, fish, beneficial oils, rise, grain, animal fats, sea salt, whole egg, corn and all other non harmful Ingredient that are beneficial and conventionally used in pet foods.

Conclusively the invention is a combination of included special ingredients (Protexin Probiotics) and technology used (vacuum coating) that are described above.

DETAILED DESCRIPTION OF THE INVENTION

Accordingly, in a first aspect, the present invention relates to a vacuum coated pet food kibble comprising within the kibble structure a mixture of viable probiotic micro-organisms and a fish oil, where said viable probiotic micro-organisms are lactic acid bacteria.

In a second aspect, the present invention relates to a vacuum coated pet food kibble comprising within the kibble structure a mixture of iable probiotic micro-organism and a fish oil, where said viable probiotic micro-organism is Saccharomyces cerevisiae.

In one embodiment of the first aspect and second aspect of the present invention, the viable micro-organisms included to the mixture are freeze dried probiotic micro-organisms.

In one embodiment of the first aspect of the present invention the probiotic micro-organisms are Enterococcus faecium.

In one embodiment of this embodiment the Enterococcus faecium minimal amount of the complete food is $1.0 \times 10^7$ CFU/Kg until $1.0 \times 10^{14}$ CFU/Kg.

In one embodiment of this embodiment the Enterococcus faecium minimal amount of the complete food is $1.0 \times 10^9$ CFU/Kg until $1.0 \times 10^{11}$ CFU/Kg.

In one embodiment of the second aspect of the present invention the Saccharomyces cerevisiae minimal amount of the complete feed is $2.5 \times 10^7$ CFU/Kg until $7.5 \times 10^{14}$ CFU/Kg,

In one embodiment of this embodiment the Saccharomyces cerevisiae minimal amount of the complete feed is preferably $2.5 \times 10^9$ CFU/Kg until $7.5 \times 10^{11}$ CFU/Kg.

In one embodiment of the first aspect and second aspect of the present invention, the fish oil is selected from following oils: mackerel, lake trout, herring, sardines, salmon or albacore tuna oil.

In one embodiment of this embodiment the fish oil is salmon oil.

In one embodiment of the first aspect and second aspect of the present invention, said pet food kibble is a pet food kibble for dogs, a pet food kibble for cats, a pet food kibble for rabbits or other rodents, or a pet food kibble for companion horses.

The present invention relates in a third aspect to a method for producing a pet food kibble according to the first aspect or the second aspect, containing the steps of

- mixing the probiotic micro-organisms with a fish oil,

- coating the main component of the conventional pet food with the mixture of the probiotic micro-organisms and said fish oil using vacuum coating.

In one embodiment of the third aspect of the present invention, the fish oil is heated to 20 °C to 25 °C prior mixing.

In one embodiment of this embodiment, the fish oil is heated to 22 °C prior mixing.

In one embodiment of the third aspect of the present invention, the coating is carried out in the sealed environment under the pressure of 100 kPa or less (1 bar or less).

In one embodiment of the third aspect of the present invention, said fish oil is selected from following oils: mackerel, lake trout, herring, sardines, salmon or albacore tuna oil.

Term pet in this document as used includes Dogs, Cats, Rabbits, other Rodents and companion Horses. Including of all ages and breeds of these animals.

Protexin - Brand of the probiotic product used product In this invention due to its specific manufacturing methods. Trademark owned and product available at Probiotics International Ltd.

Protexin is a highly concentrated probiotic, which contains millions of beneficial micro-organisms, which occur naturally in the gut of all healthy birds and animals. These micro-organisms colonise the immature gut or re-establish the disrupted gut, thus promoting the mechanism of competitive exclusion against potential pathogenic bacteria.

The probiotics and the minimum inclusion rates used in this invention will be as follows.

The probiotic strains are classed as Feed Additives under Regulation EC No. 183/2003.

Dog food

Probiotic strain registered for use in dogs:

Enterococcus faecium NCIMB 10415 EC No. 13
Date of first entry into registration: 7/11/05
Min CFU/Kg complete feed: $1.0 \times 10^9$
Min CFU/Kg complete feed: $1.0 \times 10^{10}$

Rabbit food

Probiotic strain registered for use in rabbits;

Saccharomyces cerevisiae NCYC SC47 EC E1702
Date of first entry into registration: 7/11/05
Min CFU/Kg complete feed: $2.5 \times 10^9$
Min CFU/Kg complete feed: $7.5 \times 10^{10}$

Probiotics are a category of functional food, defined as: Non digestible food ingredients, that beneficially affect the host by selectively stimulating the growth and/or activity of one or a limited number of bacteria in the colon, and thus improve host health (Gibson and Roberfroid, 1995).

The Pet food of this invention may be only in dry form as it is a factor essential to sustain the stability of the bacteria. Nevertheless this pet food can be based on any conventional pet foods and their ingredients, with the condition that the Probiotic bacteria included is stable.

Vacuum multi coating technology that is available in United Pet foods manufacturing facility is the method of including the beneficial oils, powders, smells and any other ingredients that are needed for sufficient final product.

As the Bacteria have to be protected from moist, heat and sun light, so the production process is carried out in sealed environment from the beginning until the end. The method of production will include freeze-dried bacteria being mixed with the fish oil at a required concentration. While constantly stirring the oil has to become liquid for the vacuum coater. This is achieved by warming the oil to temperature 20 °C to 25 °C the optimum temperature is 22 °C that is still tolerable by the bacteria. The oil will be vacuum coated on the kibble and thus placing the bacteria within kibble structure. This way the bacteria is protected and has a great potential for survival and recovery.

The probiotic micro-organism. *Enterococcus faecium,* contained within this invention is from the internationally recognised culture collection NCIMB (National Collections of Industrial and Marine Bacteria). The strain is grown in a fermentation chamber of 5000L capacity. It is then protected using cryoprotectants and then freeze-dried to form a powder before being blended with the Pet Food and other components of Protexin Concentrate in exact concentrations.

The micro-organism contained within this invention is a Lactic Acid Bacteria (LAB). By definition these bacteria produce lactic acid which is acidic. This ensures the growth of the bacteria in an optimum acidic environment. By creating this acidic environment LAB-s are able to prevent the growth of conforms such as *E. coli* as they prefer a more alkaline pH for growth.

Protection of the micro-organisms from adverse environmental conditions, both during and after production of bacteria is important. Cryoprotectants are applied prior to freeze-drying. This gives additional protection against moisture, oxygen and heat and adds substantially to the shelf-life of the end product. Thus while using vacuum coating technology it is possible to sustain such stability in the final product.

BRIEF DESCRIPTION OF DRAWING

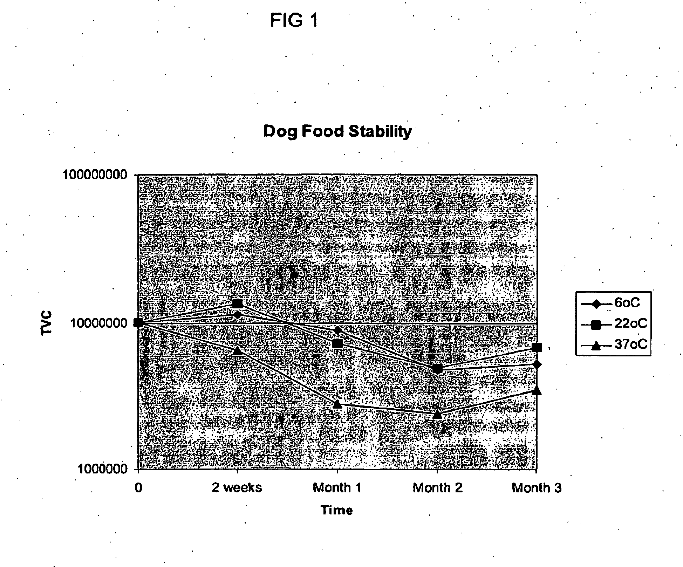

The pet food corresponding to the invention is described below with the references to drawing, where Fig 1 describes the stability of product.

Longevity Testing

Stability of the product should be tested for Total Viable Count (TVC) to give the number of Colony Forming Units (CFU) per gram of product under the following conditions:

- Refrigeration (6-8 ° Celsius)
- Room Temperature (21 +/- 3 ° Celsius)
- Accelerated temperature (37 +/- 1 ° Celsius)

The relative humidity should also be recoded. For example the relative humidity of the UK lab is the following:

- Refrigeration 39%RH
- Room Temperature 52%RH
- Accelerated temperature 54%RH

Sample details:

40 grams of product sealed in final type of product packaging (i.e. foil sachet) should be available for each monthly test as below.

| Refrigeration | Months 0, Months 1-24 inclusive |
| Room Temperature | Months 0, Months 1-24 inclusive |
| Accelerated temperature | Months 0, Months 1-12 inclusive |

Under the accelerated temperature, one month of accelerated stability results is equivalent to 4 months real time stability.

A Total Viable Count should be carried out x 4 for each month (and an average taken) using the methodology attached or similar. (What is important is that myristic acid is used as a diluent since this diluent ensures that the microorganisms contained within the oil componet of the pellet are 'dissolved' sufficiently in the final product sample).

Additional details - The details of the testing should be full recorded to include:

- Product packaging
- Storage condition: Refrigeration (6-8 °C)
- Room temperature 21 °C+/-1 °C
- Accelerated testing 37+/-1 °C
- Months: Refrigeration - 24 months
- Room temperature - 24 months
- Accelerated testing - 12 months
- All requirements in specification (to include microbiological analysis, appearance, physical properties)

Example 1 Process description

Vacuum core liquid coating is the process, which is used to place the bacteria within the kibbel/porous structure.

The manufacturing process is carried out in a sealed environment.

Firstly the non-coated product is coming out of dryer (vertical drying system with 2 levels) at a temperature of 45 °C to 60 °C (depending on data received from extruder). Then the non-coated product is going into the drum of the vacuum core coater. Coater is closing and starts moving (inside pressure 100 kPa (1 bar)) the product and is creating the vacuum atmosphere. During the process vacuum liquid coating, fats are vaporised onto the product under vacuum condition (50 kPa (0.5 bar)) Temperature of liquid during process is 20 °C to 25 °C optimum 22 °C and preservation in container is 22 °C. Normal pressure, i.e. 100 kPa (1 bar) condition is restored inside the coater. Fish oil mixed with probiotic product ingredient (enterococcus faecum or other) Is sprayed onto the product under a new vacuum condition (70 kPa (0.7 bar)). Normal pressure (100 kPa (1 bar)) condition is restored inside the coater. Digest is sprayed onto the product under the last vacuum condition (80 kPa (0.8 bar)). Normal pressure (100 kPa (1 bar)) is restored inside the coater. Finally coater is opened and the product released into the cooler.

The subject matter of the present invention is not limited with the examples given above.

**Claims**

1. A vacuum coated pet food kibble comprising within the kibble structure a mixture of viable probiotic micro-organisms and a fish oil, where said viable probiotic micro-organisms are lactic add bacteria.

2. A vacuum coated pet food kibble comprising within the kibble structure a mixture of viable probiotic micro-organism and a fish oil, where said viable probiotic micro-organism Is Saccharomyces cerevisiae.

3. The vacuum coated pet food kibble according to the claim 1 or 2, wherein the viable micro-organisms included to the mixture are freeze dried probiotic micro-organisms.

4. The vacuum coated pet food kibble according to claim 1, wherein the probiotic micro-organisms are Enterococcus faecium.

5. The vacuum coated pet food kibble according to claim 4, wherein the Enterococcus faecium minimal amount of the complete food Is $1.0 \times 10^7$ CFU/Kg until $1.0 \times 10^{14}$ CFU/Kg.

6. The vacuum coated pet food kibble according to claim 4, wherein the Enterococcus faecium minimal amount of the complete food Is $1.0 \times 10^9$ CFU/Kg until $1.0 \times 10^{11}$ CFU/Kg.

7. The vacuum coated pet food kibble according to claim 2, wherein the Saccharomyces cerevisiae minimal amount of the complete feed Is $2.5 \times 10^7$ CFU/Kg until $7.5 \times 10^{14}$ CFU/Kg.

8. The vacuum coated pet food kibble according to claim 7, wherein the Saccharomyces cerevisiae minimal amount of the complete feed Is preferably $2.5 \times 10^9$ CFU/Kg until $7.5 \times 10^{11}$ CFU/Kg.

9. The vacuum coated pet food kibble according to claim 1 or 2, wherein the fish oil is selected from following oils: mackerel, lake trout, herring, sardines, salmon or albacore tuna oil.

10. The vacuum coated pet food kibble according to claim 9, wherein the fish oil is salmon oil.

11. The vacuum coated pet food kibble according to claim 1 or 2, wherein said pet food kibble Is a pet food kibble for dogs, a pet food kibble for cats, a pet food kibble for rabbits or other rodents, or a pet food kibble for companion horses.

12. A method for producing a pet food kibble according to any of claims 1 to 11 containing the steps of

    - mixing the probiotic micro-organisms with a fish oil,
    - coating the main component of the conventional pet food with the mixture of the problotic micro-organisms and said fish oil using vacuum coating.

13. The method according to the claim 12, wherein the fish oil is heated to 20 °C to 25 °C prior mixing, such as to 22 °C prior mixing.

14. The method according to the claim 12, wherein the coating is carried out in the sealed environment under the pressure of 100 kPa or less (1 bar or less).

**15.** The method according to claim 12, wherein said fish oil is selected from following oils: mackerel, lake trout, herring, sardines, salmon or albacore tuna oil.

**Patentansprüche**

**1.** Vakuumbeschichtetes Haustiertrockenfutter, umfassend innerhalb der Trockenfutterstruktur eine Mischung von lebensfähigen probiotischen Mikroorganismen und einem Fischöl, wobei die lebensfähigen Mikroorganismen Milchsäurebakterien sind.

**2.** Vakuumbeschichtetes Haustiertrockenfutter, umfassend innerhalb der Trockenfutterstruktur eine Mischung von lebensfähigen probiotischen Mikroorganismen und einem Fischöl, wobei der lebensfähige Mikroorganismus Saccharomyces cerevisiae ist.

**3.** Vakuumbeschichtetes Haustiertrockenfutter nach Anspruch 1 oder 2, wobei die in der Mischung enthaltenen lebensfähigen Mikroorganismen gefriergetrocknete probiotische Mikroorganismen sind.

**4.** Vakuumbeschichtetes Haustiertrockenfutter nach Anspruch 1, wobei die probiotischen Mikroorganismen Enterococcus faecium sind.

**5.** Vakuumbeschichtetes Haustiertrockenfutter nach Anspruch 4, wobei der Enterococcus faecium Mindestgehalt des kompletten Futters $1,0x10^7$ KBE/Kg bis $1,01x10^{14}$ KBE/Kg ist.

**6.** Vakuumbeschichtetes Haustiertrockenfutter nach Anspruch 4, wobei der Enterococcus faecium Mindestgehalt des kompletten Futters $1,0x10^9$ KBE/Kg bis $1,0x10^{11}$ KBE/Kg ist.

**7.** Vakuumbeschichtetes Haustiertrockenfutter nach Anspruch 2, wobei der Saccharomyces cerevisiae Mindestgehalt der kompletten Fütterung $2,5x10^7$ KBE/Kg bis $7,5x10^{-4}$ KBE/Kg ist.

**8.** Vakuumbeschichtetes Haustiertrockenfutter nach Anspruch 7, wobei der Saccharomyces cerevisiae Mindestgehalt der kompletten Fütterung bevorzugt $2,5x10^9$ KBE/Kg bis $7,5x10^{11}$ KBE/Kg ist.

**9.** Vakuumbescnichtetes Haustiertrockenfutter nach Anspruch 1 oder 2, wobei das Fischöl aus folgenden Ölen gewählt wird: Makrelen-, Seeforellen-, Hering-, Sardinen-, Lachs- oder Weißer Thunfisch-Öl.

**10.** Vakuumbeschichtetes Haustiertrockenfutter nach Anspruch 9, wobei das Fischöl Lachsöl ist.

**11.** Vakuumbeschichtetes Haustiertrockenfutter nach Anspruch 1 oder 2, wobei das Haustiertrockenfutter ein Haustiertrockenfutter für Hunde, ein Haustiertrockenfutter für Katzen, ein Haustiertrockenfutter für Hasen oder andere Nager oder ein Haustiertrockenfutter für Hauspferde ist.

**12.** Verfahren zum Erzeugen eines Haustiertrockenfutters nach einem der Ansprüche 1 bis 11, enthaltend die Schritte

- Mischen der probiotischen Mikroorganismen mit einem Fischöl,
- Beschichten des Hauptbestandteils des gewöhnlichen Haustiertrockenfutters mit der Mischung aus den probiotischen Mikroorganismen und dem Fischöl mittels Vakuumbeschichtung.

**13.** Verfahren nach Anspruch 12, wobei das Fischöl vor dem Mischen auf 20°C bis 25°C erhitzt wird, wie etwa auf 22°C vor dem Mischen.

**14.** Verfahren nach Anspruch 12, wobei das Beschichten in einer abgedichteten Umgebung unter dem Druck von 100kPa oder weniger (1 Bar oder weniger) durchgeführt wird.

**15.** Verfahren nach Anspruch 12, wobei das Fischöl aus folgenden Ölen gewählt wird: Makrelen-, Seeforellen-, Hering-, Sardinen-, Lachs- oder Weißer Thunfisch-Öl.

**Revendications**

1. Une croquette pour animaux de compagnie enrobée sous vide comprenant à l'intérieur de la structure de croquette un mélange de micro-organismes probiotiques viables et d'une huile de poisson, où lesdits micro-organismes probiotiques viables sont des bactéries d'acide lactique.

2. Une croquette pour animaux de compagnie enrobée sous vide comprenant à l'intérieur de la structure de croquette un mélange d'un micro-organisme probiotique viable et d'une huile de poisson, où ledit micro-organisme probiotique viable est *Saccharomyces cerevisiae.*

3. La croquette pour animaux de compagnie enrobée sous vide selon la revendication 1 ou 2, dans laquelle les micro-organismes viables inclus dans le mélange sont des micro-organismes probiotiques lyophilisés,

4. La croquette pour animaux de compagnie enrobée sous vide selon la revendication 1, dans laquelle les micro-organismes probiotiques sont *Enterococcus faecium.*

5. La croquette pour animaux de compagnie enrobée sous vide selon la revendication 4, dans laquelle la quantité minimale d'*Enterococcus faecium* de l'aliment complet est $1,0 \times 10^7$ CFU/Kg jusqu'à $1,0 \times 10^{14}$ CFU/Kg.

6. La croquette pour animaux de compagnie enrobée sous vide selon la revendication 4, dans laquelle la quantité minimale d'*Enterococcus faecium* de l'aliment complet est $1,0 \times 10^9$ CFU/Kg jusqu'à $1,0 \times 10^{11}$ CFU/Kg.

7. La croquette pour animaux de compagnie enrobée sous vide selon la revendication 2, dans laquelle la quantité minimale de *Saccharomyces cerevisiae* de l'aliment complet est $2,5 \times 10^7$ CFU/Kg jusqu'à $7,5 \times 10^{14}$ CFU/Kg.

8. La croquette pour animaux de compagnie enrobée sous vide selon la revendication 7, dans laquelle la quantité minimale de *Saccharomyces cerevisiae* de l'aliment complet est de préférence $2,5 \times 10^9$ CFU/Kg jusqu'à $7,5 \times 10^{11}$ CFU/Kg.

9. La croquette pour animaux de compagnie enrobée sous vide selon la revendication 1 ou 2, dans laquelle l'huile de poisson est sélectionnée parmi les huiles suivantes : huile de maquereau, de truite de lac, de hareng, de sardines, de saumon ou de thon blanc.

10. La croquette pour animaux de compagnie enrobée sous vide selon la revendication 9, dans laquelle l'huile de poisson est de l'huile de saumon.

11. La croquette pour animaux de compagnie enrobée sous vide selon la revendication 1 ou 2, dans laquelle ladite croquette pour animaux de compagnie est une croquette pour animaux de compagnie pour des chiens, une croquette pour animaux de compagnie pour des chats, une croquette pour animaux de compagnie pour des lapins ou d'autres rongeurs, ou une croquette pour animaux de compagnie pour des chevaux de compagnie.

12. Une méthode pour produire une croquette pour animaux de compagnie selon une quelconque des revendications 1 à 11, contenant les étapes de

    - mélange des micro-organismes probiotiques avec une huile de poisson,
    - enrobage du composant principal des aliments pour animaux de compagnie classiques avec le mélange des micro-organismes probiotiques et de ladite huile de poisson en utilisant un enrobage sous vide.

13. La méthode selon la revendication 12, dans laquelle l'huile de poisson est chauffée à 20 °C jusqu'à 25 °C avant mélange, par exemple à 22 °C avant mélange.

14. La méthode selon la revendication 12, dans laquelle l'enrobage est effectué dans l'environnement étanche sous la pression de 100 kPa ou moins (1 bar ou moins).

15. La méthode selon la revendication 12, dans laquelle ladite huile de poisson est sélectionnée parmi les huiles suivantes : huile de maquereau, de truite de lac, de hareng, de sardines, de saumon ou de thon blanc.

FIG 1

Dog Food Stability

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 20061041903 A2
- WO 2006041903 A2

- GB 2232573 A
- US 5968569 A

**Non-patent literature cited in the description**

- **D. ROBERTS ; W. HOOPER ; M. GREENWOOD.** Practical Food Microbiology. Public Health Service, 1995, 101

- Their significance and methods of enumeration. IC-MFS Microorganisms in Foods 1. University of Toronto Press, 1988